(19) Europäisches Patentamt / European Patent Office / Office européen des brevets

(11) **EP 4 787 983 A1**

(12) **EUROPEAN PATENT APPLICATION**
published in accordance with Art. 153(4) EPC

(43) Date of publication:
05.08.2026 Bulletin 2026/32

(21) Application number: 24869832.6

(22) Date of filing: 06.06.2024

(51) International Patent Classification (IPC):
*H04W 56/00* (2009.01)

(86) International application number:
**PCT/CN2024/097710**

(87) International publication number:
**WO 2025/066270 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 28.09.2023 CN 202311295214

(71) Applicant: ZTE Corporation
Shenzhen, Guangdong 518057 (CN)

(72) Inventors:
• CUI, Fangyu
Shenzhen, Guangdong 518057 (CN)

• ZHANG, Nan
Shenzhen, Guangdong 518057 (CN)
• CAO, Wei
Shenzhen, Guangdong 518057 (CN)
• YIN, Yachao
Shenzhen, Guangdong 518057 (CN)
• LI, Junli
Shenzhen, Guangdong 518057 (CN)

(74) Representative: Ziebig Hengelhaupt Intellectual Property Attorneys
Patentanwaltskanzlei PartGmbB
Leipziger Straße 49
10117 Berlin (DE)

(54) **COMMUNICATION METHODS, COMMUNICATION APPARATUSES AND STORAGE MEDIUM**

(57) Provided are communication methods, communication apparatuses, and a storage medium. A method comprises: determining effective time offset configuration; and, on the basis of the effective time offset configuration, adjusting the effective time of a first configuration instruction of a second communication node.

Determine effective time offset configuration — S101

On the basis of the effective time offset configuration, adjust the effective time of a first configuration instruction of a second communication node — S102

FIG. 2

EP 4 787 983 A1

## Description

The present disclosure claims priority to Chinese Patent Application No. 202311295214.1, filed on September 28, 2023, which is hereby incorporated by reference in its entirety.

## TECHNICAL FIELD

The present disclosure relates to the field of communications, and in particular, to a communication method, a communication apparatus, and a storage medium.

## BACKGROUND

Currently, low frequency non-terrestrial network (NTN) has been supported in the 3rd Generation Partnership Project (3GPP) protocol. To support high frequency NTN, the 3GPP protocol discusses the requirements and corresponding enhancements for high frequency NTN (such as FR2-NTN, or NTN above 10GHz) in Release 18. Compared with low frequency NTN, a user equipment (UE) in high frequency NTN is mainly a very small aperture terminal (VSAT). An antenna of VSAT may be electronically controlled (e.g., a phased array antenna), or may be mechanically controlled (e.g., a traditional reflector antenna).

## SUMMARY

In an aspect, a communication method is provided, which is applied to a first communication node. The communication method includes:

determining an effective time offset configuration; and
adjusting an effective time of a first configuration instruction of a second communication node based on the effective time offset configuration.

In another aspect, a communication method is provided, which is applied to a second communication node. The communication method includes:

sending an effective time offset configuration to a first communication node; and
sending a first configuration instruction to the first communication node; where the effective time offset configuration is used for adjusting an effective time of the first configuration instruction.

In yet another aspect, a communication method is provided, which is applied to a first communication node. The communication method includes:

acquiring assistance information;
determining, based on the assistance information, a time for allowing to perform uplink transmission after global navigation satellite system (GNSS) information expires.

In yet another aspect, a communication method is provided, which is applied to a second communication node. The communication method includes:

determining assistance information; and
sending the assistance information to a first communication node, where the assistance information is used to indicate the first communication node to determine a time for allowing to perform uplink transmission after GNSS information expires.

In yet another aspect, a communication apparatus is provided. The communication apparatus includes:

a determination module, configured to determine an effective time offset configuration;
an adjustment module, configured to adjust an effective time of a first configuration instruction of a second communication node based on the effective time offset configuration.

In yet another aspect, a communication apparatus is provided. The communication apparatus includes:

a sending module, configured to send an effective time offset configuration to a first communication node; and
the above-mentioned sending module is further configured to send a first configuration instruction to the first communication node; where the effective time offset configuration is used for adjusting an effective time of the first configuration instruction.

In yet another aspect, a communication apparatus is provided. The communication apparatus includes:

an acquisition module, configured to acquire assistance information; and
a determination module, configured to determine, based on the assistance information, a time for allowing to perform uplink transmission after GNSS information expires.

In yet another aspect, a communication apparatus is provided. The communication apparatus includes:

a determination module, configured to determine assistance information; and
a sending module, configured to send the assistance information to a first communication node, where the assistance information is used to indicate the first communication node to determine a time for allowing to perform uplink transmission after GNSS information expires.

In yet another aspect, a communication node is provided. The communication node includes: a memory and a processor, where the memory and the processor are coupled; the memory is configured to store computer programs; and the processor, upon executing the computer programs, implements the communication method according to any of the above-mentioned aspects.

In yet another aspect, a communication apparatus is provided. The communication apparatus includes: a processor and a memory for storing instructions executable for the processor; the processor is configured to execute the instructions, to enable the communication apparatus to perform the communication method according to any of the above-mentioned aspects.

In yet another aspect, a computer-readable storage medium is provided, where a computer program instruction is stored on the computer-readable storage medium, when the computer program instruction is performed by the processor, the communication method according to any of the above-mentioned aspects is implemented.

In yet another aspect, there is provided a computer program product, where the computer program product includes computer program instructions, when the computer program instructions are executed, the communication method according to any of the above-mentioned aspects is implemented.

BRIEF DESCRIPTION OF THE DRAWINGS

In order to illustrate the technical solutions in the present disclosure more clearly, accompanying drawings needed to be used in some embodiments of the present disclosure will be introduced briefly below. Obviously, the described accompanying drawings below are merely accompanying drawings of some embodiments of the present disclosure, and for a person of ordinary skill in the art can obtain other accompanying drawings according to these accompanying drawings.

FIG. 1 is a schematic diagram of a system architecture according to some embodiments of the present disclosure.
FIG. 2 is a flowchart of a communication method according to some embodiments of the present disclosure.
FIG. 3 is a schematic diagram of an effective time according to some embodiments of the present disclosure.
FIG. 4 is a flowchart of another communication method according to some embodiments of the present disclosure.
FIG. 5 is a flowchart of yet another communication method according to some embodiments of the present disclosure.
FIG. 6 is a flowchart of yet another communication method according to some embodiments of the present disclosure.
FIG. 7 is a flowchart of yet another communication method according to some embodiments of the present disclosure.
FIG. 8 is a flowchart of yet another communication method according to some embodiments of the present disclosure.
FIG. 9 is a structural schematic diagram of a communication apparatus according to some embodiments of the present disclosure.
FIG. 10 is a structural schematic diagram of another communication apparatus according to some embodiments of the present disclosure.
FIG. 11 is a structural schematic diagram of yet another communication apparatus according to some embodiments of the present disclosure.
FIG. 12 is a structural schematic diagram of yet another communication apparatus according to some embodiments of the present disclosure.
FIG. 13 is a structural schematic diagram of yet another communication apparatus according to some embodiments of the present disclosure.

DETAILED DESCRIPTION

In order to enable those skilled in the art to better understand the technical solutions in the present disclosure, the technical solutions in the present disclosure will be described clearly and completely in conjunction with the accompanying drawings of the present disclosure. Obviously, the described embodiments are merely a part of the embodiments of the present disclosure, but not all of the embodiments of the present disclosure. All other embodiments obtained based on the embodiments of the present disclosure by an ordinary person of those skilled in the art without paying any creative effort shall belong to the protection scope of the present disclosure.

It should be noted that in the present disclosure, wordings, such as "exemplary/exemplarily" or "for example" and variations thereof are used to indicate examples, instances, or illustrations. Any embodiment or design solution described as "exemplary/exemplarily" or "for example" in the present disclosure should not be illustrated as being more preferred or advantageous over other embodiments or design solutions. Specifically, the usage of the wordings such as "exemplary/exemplarily" or "for example" is intended to present related concepts in a concrete way.

Hereinafter, terms such as "first" and "second" are used for descriptive purposes only, but are not to be understood as indicating or implying the relative importance or implicitly indicating the number of indicated technical features. Thus, features limited with wordings like "first" or "second," etc., may explicitly or implicitly include one or more of the feature(s).

In the description of the present disclosure, unless otherwise specified, a character "/" means an "or" relationship, for example, "A/B" may represent A or B. The "and/or" herein is merely an association relationship for describing associated objects, and used for indicating that there may be three relationships, for example, A and/or B may represent: only A; only B; or both A and B. In addition, "at least one" means a number of one or more, and "plurality" means a number of two or more.

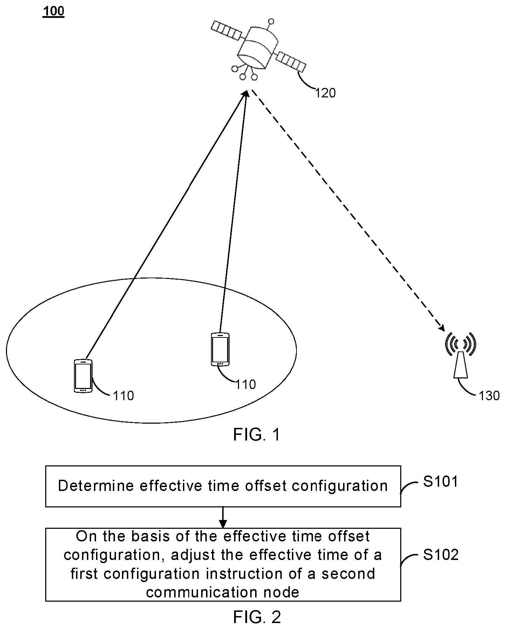

The method provided in the embodiments of the present disclosure may be applied to various communication systems. For example, the communication system may be a long term evolution (LTE) system, a 5th generation (5G) communication system, a Wi-Fi system, a 3GPP related communication system, a future evolved communication system (such as: a 6th generation (6G) communication system, etc.), or a system with integrating multiple systems, and is not limited. The method provided in the embodiments of the present disclosure is described below by taking the communication system 100 shown in FIG. 1 as an example. FIG. 1 is only a schematic diagram and does not constitute a limitation on the applicable scenarios of the technical solutions provided in the present disclosure.

As shown in FIG. 1, the communication system 100 includes: a first communication node 110, a non-terrestrial network 120, and a second communication node 130; where the first communication 110 and the second communication node 130 are connected via the non-terrestrial network 120 for communication.

The first communication node 110 is used for communication, information acquisition, entertainment, or the like.

In some embodiments, the first communication node 110 may communicate with the second communication node 130 via the non-terrestrial network 120.

In some embodiments, a link between the first communication node 110 and the non-terrestrial network 120 is a serving link. And for all other communication nodes in the same area as the first communication node 110, the above serving link is public.

In some embodiments, the same area may be a cell where the first communication node 110 is located.

It should be noted that, depending on actual situations, a number of the first communication node 110 may be one or more, and the number of the first communication nodes 110 is not limited in the embodiments of the present disclosure.

In some embodiments, the first communication node 110 may be a UE (such as a mobile phone, a tablet computer, a desktop computer, a laptop computer, a handheld computer, a notebook computer, an ultra-mobile personal computer (UMPC), a netbook, and a cellular phone), an augmented reality (AR)/virtual reality (VR) device, or the like. A form of the first communication node 110 is not specifically limited in the embodiments of the present disclosure.

The non-terrestrial network 120 is used for implementing long-distance data transmission and communication.

In some embodiments, the non-terrestrial network 120 may provide a communication channel for the first communication node 110 and the second communication node 130.

In some embodiments, the above non-terrestrial network 120 may be a satellite communication network, a high-altitude airship network, an unmanned aerial vehicle network, an aerostat network, etc., and form of the non-terrestrial network 120 is not specifically limited in the embodiments of the present disclosure.

The second communication node 130 is used for data exchange and communication.

In some embodiments, the second communication node 130 may be a communication node in the non-terrestrial network 120, for example, the second communication node 130 may be a base station for the non-terrestrial network 120.

In some embodiments, the link between the second communication node 130 and the non-terrestrial network 120 is a feeder link.

In some embodiments, the second communication node 130 may be located on the non-terrestrial network 120.

It should be noted that the system architecture and application scenes described in the embodiments of the present disclosure are intended to illustrate the technical solutions of the embodiments of the present disclosure more clearly, and do not constitute a limitation on the technical solutions provided in the embodiments of the present disclosure. A person of ordinary skill in the art may appreciate that with the evolution of the system architecture and the emergence of new service scenes, the technical solutions provided in the embodiments of the present disclosure are also applicable to similar technical problems.

The configuration of software and hardware of a terminal is crucial for whether the terminal is capable of timely executing configuration instructions from a network side and maintain normal communication with the network side. For example, after the terminal receives a configuration instruction from the network side, an effective time of the configuration instruction at the terminal is in a millisecond level, and due to limitations of the software and hardware of the terminal, an adaptation time of the terminal to the configuration instruction may be in a second level. The mismatch between the effective time of the configuration instruction at the terminal and the adaptation time of the terminal to the configuration instruction may lead to failure of related configurations on the network side, affecting normal communication between the terminal and the network side.

Exemplarily, after the first communication node receives a beam configuration instruction from the network side (for example, a configuration instruction for a transmission configuration indication (TCI), and/or a configuration instruction for a spatial relationship), the effective time of the beam configuration instruction at the first communication node is in a millisecond level. For example, in current 3GPP protocols, a beam configuration instruction (for example, a configuration instruction for TCI, and/or a configuration instruction for a spatial relationship) may be indicated through a medium access control control element (MAC CE) or downlink control information (DCI). For a configuration instruction for TCI indicated through a MAC CE, if the first communication node transmits corresponding hybrid automatic repeat request-acknowledgement (HARQ-ACK) information in slot n, the effective time of the beam configuration instruction is a first slot after m.

$$\mathrm{m} = n + 3N_{slot}^{subframe,\mu} + \frac{2^{\mu}}{2^{\mu_{K_{mac}}}} \cdot k_{mac} \text{, where a}$$

maximum value of $k_{mac}$ is 512, and a value of $k_{mac}$ is related to settings of a satellite orbit height and a synchronization reference point.

At this time, the effective time of the beam configuration instruction is approximately 515 ms at maximum.

Similarly, for a beam configuration instruction indicated through DCI (a configuration instruction for TCI, and/or a configuration instruction for a spatial relationship), after the first communication node completes transmission of corresponding HARQ-ACK information, the effective time of the configuration instruction is a first slot after beamAppTime symbols (where a maximum value of beamAppTime is 336). At this time, the effective time of the beam configuration instruction is approximately 336/14=24 ms at maximum.

However, if an antenna of the first communication node is mechanically controlled, the time for the mechanically controlled antenna to perform beam switching to adapt to the beam configuration instruction may be in a second level; for example, 1.5 seconds. Therefore, the effective time of the beam configuration instruction is insufficient to cover the time for the mechanically controlled antenna to perform beam switching to adapt to the configuration instruction.

Thus, limitations of the software and hardware of the terminal may cause the terminal to be unable to adapt to the corresponding configuration instruction when the configuration instruction from the network side takes effect, leading to failure of related configurations on the network side and affecting normal communication between the terminal and the network side.

To address the above problem, referring to FIG. 2, FIG. 2 is a flowchart of a communication method provided in the embodiments of the present disclosure. As shown in FIG. 2, the communication method provided in the embodiments of the present disclosure is applied to a first communication node, and includes the following S101 and S102.

In S101, an effective time offset configuration is determined.

In some embodiments, the effective time offset configuration is used for the first communication node to adjust the effective time of a first configuration instruction.

Exemplarily, after the first communication node receives the first configuration instruction, there is an effective time for the first configuration instruction, and the first communication node may adjust the effective time of the first configuration instruction based on the effective time offset configuration.

In some embodiments, the first configuration instruction is used to indicate the first communication node to adjust related configurations in the first communication node to adapt to the first configuration instruction.

In some embodiments, the first configuration instruction may be an instruction related to a beam configuration.

For example, the first configuration instruction at least includes: a beam configuration instruction.

In some embodiments, the beam configuration instruction includes at least one of: a beam identification (ID), beam switching, a TCI state indication, TCI state activation, TCI state switching, spatial relationship (SR) indication, SR activation, SR switching, etc. For example, the first configuration instruction may be a configuration instruction for TCI (e.g., a TCI state indication, where the TCI state indication is used to indicate the first communication node to activate and update a state of TCI of the first communication node to adapt to the first configuration instruction).

In some embodiments, the first configuration instruction is sent from a second communication node (i.e., the network side) to the first communication node.

In some embodiments, the second communication node is a communication node in a non-terrestrial network.

Exemplarily, the first configuration instruction may be sent from the second communication node to the first communication node via the non-terrestrial network.

In some embodiments, the effective time offset configuration includes at least one of: a scaling factor, an offset value.

In some embodiments, the effective time offset configuration is determined according to at least one of: a capability, a type, or a characteristic of the first communication node.

In some embodiments, the capability of the first communication node may be an antenna capability of the first communication node. In a case of configurations for the first communication node are different, its antenna capabilities are also different. For example, according to the different configurations for the first communication node, an antenna type of the first communication node may be a high-frequency electronically-controlled antenna, a low-frequency electronically-controlled antenna, a high-frequency mechanically-controlled antenna, a low-frequency mechanically-controlled antenna, or an omnidirectional antenna. The antenna capabilities corresponding to the various types of antenna are different.

In some embodiments, the effective time offset configuration is predefined or pre-configured.

As an example, the 3GPP protocol predefines or pre-configures one or more effective time offset configurations for the first communication node based on the capability of the first communication node; after initially accessing to a network or after accessing the network, the first communication node reports its own capability, and negotiates with the second communication node on the effective time offset configuration to reach an agreement.

As another example, the 3GPP protocol predefines/pre-configures one or more effective time offset configurations for each communication node based on capabilities of different communication nodes; in this case, the first communication node may determine a corresponding effective time offset configuration based on its own capability, and indicate the effective time offset configuration to the second communication node.

It should be noted that the first communication node may have no predefined effective time offset configuration, or correspond to a default effective time offset configuration, and the contents of the predefined effective time offset configuration in the 3GPP protocol are not limited in the embodiments of the present disclosure.

In some embodiments, the effective time offset configuration is configured by the second communication node.

As an example, after initially accessing to a network or after accessing to the network, the first communication node reports its own capability; after receiving the capability of the first communication node, the second communication node indicates a corresponding effective time offset configuration to the first communication node.

As another example, after initially accessing to a network or after accessing to the network, the first communication node reports its own capability; after the second communication node receives the capability of the first communication node, the second communication node sends one or more effective time offset configurations to the first communication node; after the first communication node receives an indication from the second communication node, the first communication node selects one from the one or more effective time offset configurations.

As another example, the second communication node broadcasts one or more effective time offset configurations; after the first communication node receives the broadcast from the second communication node, the first communication node selects one from the one or more effective time offset configurations according to the capability of the first communication node, or the capability of the first communication node may not correspond to an effective time offset configuration (i.e., the first communication node uses an original effective time of the first configuration instruction without adjusting the effective time; or the adjustment to the effective time is 0 seconds).

Further, after the first communication node selects an effective time offset configuration used by itself (or selecting not to use/not to perform an effective time offset configuration), the first communication node may further report the selected effective time offset configuration to the second communication node.

It should be noted that, if the effective time offset configuration in the second communication node corresponds to the capability of the first communication node (e.g., if the second communication node indicates a corresponding effective time offset configuration for each communication node), the second communication node may determine the effective time offset configuration used by the first communication node according to the capability reported by the first communication node, and in this case, the first communication node does not need to report the effective time offset configuration used by the first communication node to the second communication node.

Meanwhile, an effective time of the first configuration instruction in the effective time offset configuration indicated by the second communication node to the first communication node should be greater than or equal to an effective time of the first configuration instruction corresponding to the capability reported by the first communication node.

In some embodiments, the effective time offset configuration may be indicated by at least one of: a system information block (SIB) signaling, a (dedicated) radio resource control (RRC) signaling, a MAC CE, uplink control information (UCI), or DCI.

In some embodiments, the above effective time offset configuration may be effective for all MAC CEs, or may be effective only for some or certain MAC CEs (for example, an instruction related to the beam configuration). For example, the instruction related to the beam configuration includes: a TCI state indication or a spatial relationship configuration instruction.

For example, the effective time offset configuration is effective only for a MAC CE/PDSCH (physical downlink shared channel) containing a specific configuration instruction (e.g., a TCI state indication or a spatial relationship configuration instruction). For example, after the first communication node receives the MAC CE/PDSCH containing the TCI state indication, the first communication node additionally delays an effective time of the TCI state indication for a period of time according to the effective time offset configuration.

In some embodiments, the above effective time offset configuration may be effective for all DCI configurations, or may be effective only for some or certain DCI configurations (for example, an instruction related to the beam configuration).

For example, the effective time offset configuration is effective only for a DCI containing a specific configuration instruction (e.g., a TCI state indication or a spatial relationship configuration instruction). For example, after the first communication node receives a DCI containing the TCI state indication, if an indicated TCI state is different from a previously indicated TCI state, the first communication node additionally delays a time for applying a new TCI state for a period of time according to the effective time offset configuration.

In S102, an effective time of a first configuration instruction of a second communication node is adjusted based on the activation time offset configuration.

In some embodiments, the first communication node may determine the effective time of the first configuration instruction based on the effective time offset configuration, and adjust the effective time of the first configuration instruction.

In some embodiments, the effective time of the first configuration instruction is a time from a reference time with a first latency is passed through.

In some embodiments, the reference time is a time of receiving the first configuration instruction, or a time of sending feedback information corresponding to the first configuration instruction.

For example, the reference time is a time of the first communication node receiving the first configuration instruction sent from the second communication node (e.g., a MAC CE/PDSCH, DCI/PDCCH (physical downlink control channel), a (dedicated) RRC signaling, etc.); or a time of sending a HARQ-ACK (which may be carried on the PUCCH, PUSCH, etc.) corresponding to the first configuration instruction to the second communication node.

For example, the first communication node may determine the first latency based on the effective time offset configuration, and adjust the effective time of the first configuration instruction of the second communication node according to the first latency and the reference time. In some embodiments, the effective time offset configuration includes an offset value, a scaling factor.

As an example, the first latency may be determined according to the effective time offset configuration.

For example, the first latency is the offset value; for example, if the offset value is A, then the first latency is A.

As another example, the first latency is determined according to at least one of the effective time offset configuration or a second latency.

For example, the first latency is a sum of the second latency and the offset value; for example, if the second latency is B and the offset value is A, the first latency is A+B.

For example, the first latency is a product of the second latency and the scaling factor; for example, if the second latency is B and the scaling factor is C, the first latency is BC.

It should be noted that the second latency may include one or more portions. For example, for an effective time offset configuration sent by using a MAC CE, the second latency may be k slots/subframes/milliseconds;

where

$$k = 3N_{slot}^{subframe,\mu} + \frac{2^{\mu}}{2^{\mu_{K_{mac}}}} k_{mac}.$$

For an effective time offset configuration sent by using DCI, the second latency may be k=beamAppTime symbols.

In some embodiments, the first latency may be determined according to the effective time offset configuration and a third latency.

Exemplarily, the first latency is a sum of the third latency and the offset value. Herein, the third latency is a product of the second latency and the scaling factor. For example, if the second latency is B, the offset value is A, and the scaling factor is C, the first latency is BC+A.

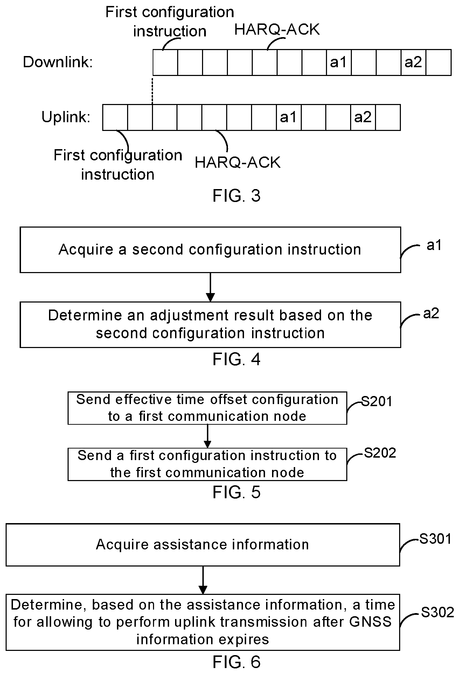

In some embodiments, as shown in FIG. 3, FIG. 3 is a schematic diagram of a first communication node adjusting an effective time of a first configuration instruction of a second communication node according to an effective time offset configuration. After the first communication node receives the first configuration instruction, the first communication node first returns a HARQ-ACK corresponding to the first configuration instruction. If the effective time of the first configuration instruction is not adjusted according to the effective time offset configuration, the instruction may take effect at time point a1 in the figure; if the effective time of the first configuration instruction is adjusted according to the effective time offset configuration, the instruction may take effect at time point a2 in the figure.

It should be noted that, if the first configuration instruction includes a TCI state activation instruction, the first communication node needs to perform beam switching (beam adjustment/antenna adjustment) according to the TCI state activation instruction to update the TCI. If the antenna of the first communication node is a mechanical antenna, a time for it to perform beam switching is usually greater than 1 second, while the effective time of the TCI state activation instruction is in a millisecond level, and this effective time is insufficient to cover the time for the mechanically controlled antenna to perform beam switching. To avoid the above-mentioned situation where the TCI state activation instruction takes effect (i.e., using the new TCI) before the beam switching is completed, leading to communication interruption or errors, an additional effective time offset configuration for the effective latency of the TCI state activation instruction is required. If the antenna of the first communication node is an electronic antenna, a time for beam switching of the antenna is very short (usually less than 1 microsecond), there is no need for an additional effective time offset configuration for the effective time of the TCI state activation instruction, or only a very small effective time offset configuration is needed.

It may be understood that, by determining the effective time offset configuration and adjusting the effective time of the first configuration instruction based on the effective time offset configuration, the first communication node may match the effective time of the first configuration instruction with an adaptation time of the first communication node for the first configuration instruction, thus ensuring that when the first configuration instruction takes effect, related configurations in the first communication node may adapt to the first configuration instruction, thereby ensuring normal communication between the first communication node and the second communication node, avoiding communication termination or delay, and improving communication quality and reliability.

In some embodiments, as shown in FIG. 4, the above method further includes a1-a2.

In a1, a second configuration instruction is acquired.

In some embodiments, the first communication node may acquire the second configuration instruction sent from the second communication node.

In some embodiments, the second communication node may control whether to enable the effective time offset configuration.

In some embodiments, the second communication node may send a second configuration instruction via a non-terrestrial network; for example, the second configuration instruction may be indicated by at least one of a SIB broadcast, a (dedicated) RRC signaling, a MAC CE, or DCI.

Exemplarily, if the second communication node is configured with a (dedicated) RRC signaling, the second communication node confirms that the effective time offset configuration is enabled; otherwise (if the second communication node is not configured with a (dedicated) RRC signaling, or is configured with a (dedicated) RRC signaling, but the RRC signalling is set to disabled), the effective time offset configuration is not enabled.

In a2, whether to enable an effective time offset configuration is determined based on the second configuration instruction.

As an example, the first communication node may determine whether to enable the effective time offset configuration based on an indication manner of the second configuration instruction.

For example, if the first communication node determines that the indication manner of the second configuration instruction is a (dedicated) RRC signaling, and the (dedicated) RRC signaling is not set to disabled, it determines to enable the effective time offset configuration.

As another example, the first communication node parses the second configuration instruction and determines whether to enable the effective time offset configuration according to the content of the parsed second configuration instruction.

Exemplarily, the second configuration instruction includes a first enable identifier indicating whether to enable the effective time offset configuration; the first communication node determines whether to enable the effective time offset configuration according to the parsed first enable identifier.

In some embodiments, the first enable identifier may be 0 or 1; when the first enable identifier is 1, it indicates to enable the effective time offset configuration; when the first enable identifier is 0, it indicates not to enable the effective time offset configuration.

It should be noted that the above contents are only some examples given by the embodiments of the present disclosure regarding how to determine whether to enable the effective time offset configuration according to the second configuration instruction. Depending on different actual situations, the method for the first communication node to determine whether to enable the effective time offset configuration according to the second configuration instruction may also be different, which is not limited in the embodiments of the present disclosure.

It may be understood that, in the communication method provided in the embodiments of the present disclosure, the second communication node sends the second configuration instruction to the first communication node. When the second configuration instruction indicates to enable the effective time offset configuration, the first communication node adjusts the effective time of the first configuration instruction according to the effective time offset configuration; when the second configuration instruction indicates not to enable the effective time offset configuration, even if the first communication node determines the effective time offset configuration, it does not use the effective time offset configuration to adjust the effective time of the first configuration instruction; in this way, the flexibility of adjusting the effective time of the first configuration instruction may be improved.

Referring to FIG. 5, FIG. 5 is a flowchart of a communication method provided in the embodiments of the present disclosure. As shown in FIG. 5, the communication method provided in the embodiments of the present disclosure is applied to a second communication node, and may be implemented as the following S201-S202.

In S201, an effective time offset configuration is sent to a first communication node.

The effective time offset configuration is used to adjust an effective time of a first configuration instruction.

In S202, a first configuration instruction is sent to the first communication node.

In some embodiments, the implementation of the above S201-S202, and the method for determining the effective time offset configuration may refer to the above S101-S102, which will not be repeated in the embodiments of the present disclosure.

It may be understood that, by sending the effective time offset configuration to the first communication node, the second communication node enables the first communication node, upon receiving the first configuration instruction, to adjust the effective time of the first configuration instruction based on the effective time offset configuration, so as to match an adaptation time of the first communication node for the first configuration instruction, in this way, the communication quality between the first communication node and the second communication node may be ensured, and the communication stability may be improved.

In an internet of things non-terrestrial network (internet of things-NTN, IoT-NTN), communication and GNSS positioning are not guaranteed to be performed simultaneously. Therefore, after acquiring GNSS information, the first communication node needs to report a valid time of the GNSS information to the IoT-NTN. Then the first communication node and the IoT-NTN may reach an agreement to determine within what time period the first communication node is capable of performing accurate pre-compensation based on the GNSS information. In the traditional Rel-17 IoT-NTN, if the (original) valid time of the GNSS information expires, it is considered that the first communication node cannot maintain uplink transmission. However, if an existing 3GPP protocol-supported closed-loop adjustment mechanism (for example, closed-loop timing advance (TA) adjustment) is considered, an error in the uplink transmission time caused by GNSS positioning error may be compensated by a closed-loop adjustment signaling. At this time, even if the (original) GNSS information expires, the first communication node is capable of performing uplink transmission for a period of time. To obtain as long an uplink transmission time as possible, the IoT-NTN needs to indicate the time for which the first communication node is capable of continuing the uplink transmission after the (original) GNSS information expires (without re-acquiring the GNSS information).

For the above problems, referring to FIG. 6, FIG. 6 is a flowchart of a communication method provided in the embodiments of the present disclosure. As shown in FIG. 6, the communication method provided in the embodiments of the present disclosure is applied to a first communication node, and may be implemented as the following S301-S302.

In S301, assistance information is acquired.

In some embodiments, the assistance information is used to indicate a time for allowing the first communication node to perform uplink transmission after GNSS information expires.

In some embodiments, the assistance information is predefined, pre-configured, or configured by a second communication node.

In some embodiments, the assistance information is indicated by at least one of: a SIB signaling, a (dedicated) RRC signaling, a MAC CE, or DCI.

As an example, if the second communication node uses SIB broadcast to indicate the assistance information, one piece of assistance information may be broadcast in a SIB, which applies to all first communication nodes; or multiple pieces of assistance information may be broadcast, which apply to different types of first communication nodes (for example, first communication nodes with different communication speeds). After the first communication node selects a piece of assistance information from the pieces of assistance information broadcast by the second communication node, the first communication node may report the selected assistance information (for example, report an index of the assistance information, or report a time for continuing uplink transmission indicated by the assistance information).

As another example, if the second communication node uses a (dedicated) RRC signaling to indicate the assistance information, a new (dedicated) RRC signaling may be defined, or a new information element (IE) may be added to an existing RRC signaling.

As yet another example, if a second communication node uses a MAC CE to indicate the assistance information, the following indication manners may be considered based on actual conditions.

In b1, the second communication node defines a new MAC CE to indicate the assistance information. The second communication node may allocate a corresponding MAC header/subheader, a LCID (logical channel identity), or an eLCID (extended logical channel identity) for this MAC CE.

In b2, the second communication node reuses an existing MAC CE and/or a MAC (PDU) header.

In some embodiments, the above b2 includes at least one of the following:

b2-1: The second communication node redefines/-reinterprets a MAC header (including redefining/reinterpreting a whole bit field or at least one state therein). For example, the second communication node redefines a certain bit field (e.g., a reserved bit in a MAC CE TAC) in the MAC header; if it indicates a state 1, the corresponding MAC CE indicates the above assistance information; otherwise (e.g., indicating a state 2), the corresponding MAC CE indicates legacy MAC CE contents (e.g., the MAC CE TAC).

b2-2: The second communication node redefines/-reinterprets a MAC CE (including redefining/reinterpreting a whole bit field or at least one state therein). For example, the second communication node redefines a certain bit field (e.g., a TAG in a MAC CE TAC) in the MAC CE; if it indicates a state 1, this MAC CE indicates the above assistance information; otherwise (e.g., indicating other states), the corresponding MAC CE indicates legacy MAC CE contents (e.g., the MAC CE TAC).

b2-3: In a case where a preset condition is satisfied (e.g., timeAlignmentTimer is configured to infinity), the second communication node redefines/reinterprets a MAC CE (including redefining/reinterpreting a whole bit field or at least one state therein) to indicate the above assistance information; otherwise, the legacy MAC CE definition is used (the MAC CE is not redefined/reinterpreted).

In b3, the second communication node enhances an existing MAC CE.

In some embodiments, the above b3 includes at least one of the following:

b3-1: In a case where a preset condition is satisfied (e.g., timeAlignmentTimer is configured to infinity), the second communication node additionally adds a number of bits behind an existing MAC CE to indicate the above assistance information; otherwise, the legacy MAC CE format is used.

b3-2: The second communication node additionally adds a number of bits behind an existing MAC CE. In a case where a preset condition is satisfied (e.g., timeAlignmentTimer is configured to infinity), these bits are used to indicate the above assistance information; otherwise, these bits are reserved (i.e., not used to indicate any information) or indicate other information.

b3-3: The second communication node uses the method in b2-1 to redefine/reinterpret a MAC header. If it indicates a state 1, a number of bits are additionally added behind the corresponding MAC CE to indicate the above assistance information; otherwise, the legacy MAC CE format is used.

b3-4: The second communication node additionally adds a number of bits behind an existing MAC CE. The method in b2-1 is used to redefine/reinterpret a MAC header. If it indicates a state 1, these bits are used to indicate the above assistance information; otherwise, these bits are reserved (i.e., not used to indicate any information) or indicate other information.

In S302, based on the assistance information, a time for allowing to perform uplink transmission after GNSS information expires is determined.

In some embodiments, the assistance information includes a first time.

In some embodiments, in a case where pieces of assistance information are different, the time for allowing the first communication node to perform uplink transmission after the (original) GNSS information expires (i.e., a timing duration of a GNSS information timer) are also different. At the same time, there may be different indication manners according to different pieces of assistance information; that is, different solutions (such as extending the GNSS validity time, introducing a new timer, extending a new timer, extending an existing timer, reusing an existing timer, etc.) may be used to achieve the time for allowing the first communication node to perform uplink transmission after the (original) GNSS information expires.

As an example, the time for allowing to perform uplink transmission is the first time; for example, if the first time is Y, the time for allowing to perform uplink transmission (i.e., the first time) is Y.

As another example, the time for allowing to perform uplink transmission is a second time; where the second time is a difference between the first time and a remaining valid time for the GNSS information; for example, if the first time is Y, and the remaining valid time for the GNSS information after the first communication node receives the assistance information (or information carrying the assistance information) is Z, then the time for allowing to perform uplink transmission (i.e., the second time) is Y-Z. In this case, if Y-Z is less than or equal to 0, the valid time for the GNSS information or the time for allowing to perform uplink transmission is not extended.

As yet another example, the time for allowing to perform uplink transmission is a third time, where the third time is a difference or a sum of the first time and an offset time.

In some embodiments, the offset time is preconfigured or configured by the second communication node.

For example, if the first time is Y and the offset time is M, the time for allowing to perform uplink transmission (i.e., the third time) is Y+M or Y-M.

As yet another example, the time for allowing to perform uplink transmission is a fourth time, where the fourth time is a difference or a sum of the second time and an offset time.

For example, if the second time is Y-Z and the offset time is M, the time for allowing to perform uplink transmission (i.e., the fourth time) is Y-Z+M or Y-Z-M.

As a possible implementation manner, the above S302 may be implemented as: after acquiring the assistance information, the first communication node extends a timing duration of a first timer for the GNSS information, where an extended duration is any one of the first time, the second time, the third time, or the fourth time; or after the first timer expires, the first communication node restarts the first timer and sets a timing duration of the first timer to any one of the first time, the second time, the third time, or the fourth time.

In some embodiments, if the second time is less than or equal to 0, the timing duration of the first timer is not extended or set.

As another possible implementation manner, the above S302 may be implemented as: after the first timer for the GNSS information expires, the first communication node starts a second timer and sets a timing duration of the second timer to any one of the first time, the second time, the third time, or the fourth time.

In some embodiments, after the expiration of the first timer and before the expiration of the second timer; or when any one of the first timer and the second timer has not expired, the first communication node is allowed to perform uplink transmission. If the second time is less than or equal to 0, the timing duration of the second timer is not extended or set; that is, after the first timer expires, the first communication node is not allowed to perform uplink transmission; or if the second timer expires, the first communication node is not allowed to perform uplink transmission.

As yet another possible implementation manner, the above S302 may be implemented as: after acquiring the assistance information, the first communication node starts a second timer and sets a timing duration of the second timer to the first time or the third time.

For example, the above first timer is a timer used to determine validity of the GNSS information.

In some embodiments, after the expiration of the first timer and before the expiration of the second timer; or when any one of the first timer and the second timer has not expired, the first communication node is allowed to perform uplink transmission. If the third time is less than or equal to 0, the timing duration of the second timer is not extended or set; that is, after the first timer expires, the first communication node is not allowed to perform uplink transmission; or if the second timer expires, the first communication node is not allowed to perform uplink transmission.

It should be noted that, the second timer in the above examples may be a new timer used to indicate the time for allowing the first communication node to perform uplink transmission after the (original) GNSS information expires; or may be an existing timer (e.g., timeAlignmentTimer), which is used to (implicitly) indicate the time for allowing the first communication node to perform uplink transmission after the (original) GNSS information expires.

In some embodiments, the assistance information may be indicated or configured through a newly defined signaling; or the assistance information may be indicated or configured through an existing signaling, for example, a configuration signaling for timeAlignmentTimer.

If the timeAlignmentTimer is configured as infinity, then the assistance information is configured through a new signaling. Otherwise, the assistance information is implicitly indicated by a length of the timeAlignmentTimer.

In some embodiments, over time, the error in the positioning information in the GNSS information may gradually increase, and the time for uplink transmission that the first communication node is capable of maintaining through closed-loop adjustment may shorten. If an existing timer and configuration (such as the timeAlignmentTimer) are used to implicitly indicate the time for performing uplink transmission after the (original) GNSS information expires, then each time the first communication node receives a MAC CE TAC, the time for the first communication node to perform uplink transmission after the (original) GNSS information expires will be correspondingly extended. Thus, if a long timeAlignmentTimer is configured (assumed to have a length of X), but the received MAC CE TAC may only extend the time for uplink transmission by X', if X' < X, the first communication node cannot further extend the time for allowing to perform uplink transmission by increasing the reception frequency of the MAC CE TAC. Therefore, an additional offset or constraint (for example, a third time) may be introduced to indicate the time for the first communication node to perform uplink transmission after the original GNSS information expires.

As an example, if the second communication node configures the timeAlignmentTimer with a length of P, and an additional offset time N is introduced, then the first communication node is capable of performing uplink transmission before the first timer reaches P-N.

As another example, if an expiry time of the (original) GNSS information is Q, and an additional offset time N is introduced, then the first communication node is capable of performing uplink transmission before Q+N; after Q+N, the first communication node cannot perform uplink transmission.

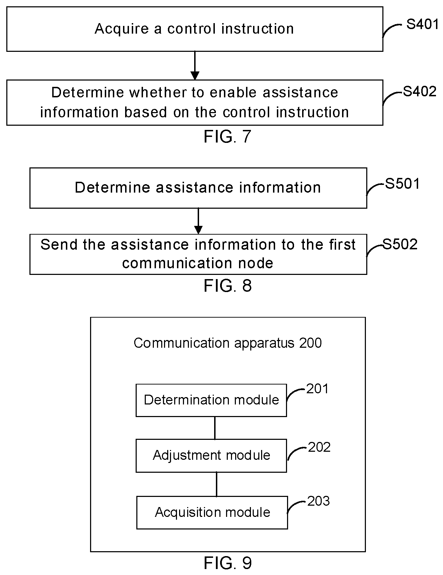

In some embodiments, as shown in FIG. 7, the above method further includes the following S401-S402.

In S401, a control instruction is acquired.

In some embodiments, the second communication node may control whether a function of the first communication node continuing to perform uplink transmission (i.e., using the assistance information) after the (original) GNSS information expires is enabled.

In some embodiments, the control instruction may be indicated through at least one of: SIB broadcast, a dedicated RRC signaling, a MAC CE, or DCI.

In some embodiments, if the second communication node configures a (dedicated) RRC signaling, then the first communication node is allowed to continue to perform uplink transmission after the (original) GNSS information expires; otherwise (if the second communication node does not configure a (dedicated) RRC signaling, or configures the (dedicated) RRC signaling but sets the RRC signaling to disable), then after the (original) GNSS information expires, the first communication node is not allowed to continue to perform uplink transmission.

In some embodiments, when the assistance information is enabled, an existing timer (for example, the timeAlignmentTimer) and related parameters may be used to indicate the time for the first communication node to perform uplink transmission after the (original) GNSS information expires; if the assistance information is not enabled, the existing timer (for example, the timeAlignmentTimer) and related parameters only perform their original functions.

In S402, based on the control instruction, whether to enable the assistance information is determined.

As an example, the first communication node may determine whether to enable the assistance information based on an indication manner of the control instruction.

For example, if the first communication node determines that the indication manner of the second configuration instruction is a (dedicated) RRC signaling, and the (dedicated) RRC signaling is not set to disable, then it is determined to enable the assistance information.

As another example, the first communication node parses the control instruction, and determines whether to enable the assistance information based on the contents of the parsed control instruction.

Exemplarily, the control instruction includes an enable identifier for indicating whether to enable the assistance information; the first communication node determines whether to enable the assistance information based on the enable identifier in the parsed control instruction.

In some embodiments, a second enable identifier may be 0 or 1; when the second enable identifier is 1, it indicates that the effective time offset configuration is enabled; when the second enable identifier is 0, it indicates that the effective time offset configuration is not enabled.

It should be noted that the above contents are only some examples provided in the embodiments of the present disclosure on how to determine whether to enable the assistance information based on the control instruction. Depending on different actual situations, the method for the first communication node to determine whether to enable the assistance information based on the control instruction may also be different, which is not limited in the embodiments of the present disclosure.

It can be understood that in the communication method provided in the embodiments of the present disclosure, the second communication node sends a control instruction to the first communication node, and when the control instruction indicates to enable the assistance information, the first communication node adjusts the time for continuing to perform uplink transmission based on the assistance information; when the assistance information is not enabled, even if the first communication node determines the assistance information, it does not use the assistance information to adjust the time for allowing to perform uplink transmission; in this way, the flexibility of adjusting the time for uplink transmission is improved.

It can be understood that the first communication node acquires the assistance information and determines the time for allowing to perform uplink transmission after the (original) GNSS information expires based on the assistance information, in this way, the first communication node may still obtain accurate positioning and navigation data through uplink transmission after the (original) GNSS information expires, and related processing and calculations may be performed, thus improving the reliability of positioning and navigation, and also improving the user experience.

Referring to FIG. 8, FIG. 8 it is a flowchart of a communication method provided in the embodiments of the present disclosure. As shown in FIG. 8, the communication method provided in the embodiments of the present disclosure is applied to a second communication node, and may be implemented as the following S501-S502.

In S501, assistance information is determined.

In some embodiments, the assistance information is used to indicate a time for allowing the first communication node to perform uplink transmission after GNSS information is determined as expiring.

In S502, the assistance information is sent to the first communication node.

In some embodiments, the contents of the above S501-S502 may refer to the implementation of the above S301-S302, which are not repeated here in the embodiments of the present disclosure.

It can be understood that the second communication node determines the assistance information and sends the assistance information to the first communication node, thus the time for allowing the first communication node to perform uplink transmission after the (original) GNSS information expires may be indicated, enabling the first communication node to obtain accurate positioning and navigation data through uplink transmission after the (original) GNSS information expires, and related processing and techniques may be performed, thus improving the reliability of positioning and navigation, and also improving the user experience.

The solutions provided in the embodiments of the present disclosure are introduced above from the perspective of methods. It can be understood that, in order to implement the above functions, the communication apparatus includes at least one of corresponding hardware structures or software modules for implementing various functions. Those skilled in the art should easily realize that the embodiments of the present disclosure are able to be implemented in the form of hardware or a combination of hardware and computer software in combination with units and steps of algorithms described in the embodiments disclosed in the present disclosure. Whether a certain functionality is implemented by hardware or by computer software driving hardware depends on the specific application and design constraint conditions of the technical solutions. A professional technician may use different methods to implement the described functions for each specific application, but such implementation should not be considered beyond the scope of the embodiments of the present disclosure.

The communication apparatus may be divided into functional modules according to the above-mentioned method embodiments in the embodiments of the present disclosure. For example, each functional module may be divided corresponding to each function, or two or more functions may be integrated into one functional module. The above-mentioned integrated module may implemented in the form of hardware, or may be implemented in the form of software. It should be noted that the division of the modules in the embodiments of the present disclosure is illustrated, which is only a logical functional division, and there may be other division manners in an actual implementation. The following is illustrated by adopting a division of each functional module corresponding to each function as an example.

FIG. 9 is a structural schematic diagram of a communication apparatus provided in the embodiments of the present disclosure. The communication apparatus is applied to a first communication node, and is capable of performing the communication method provided in the above method embodiments. As shown in FIG. 9, the communication apparatus 200 includes: a determination module 201 and an adjustment module 202. In some embodiments, the communication apparatus 200 further includes an acquisition module 203.

The determination module 201 is configured to determine an effective time offset configuration.

The adjustment module 202 is configured to adjust an effective time of a first configuration instruction of a second communication node based on the effective time offset configuration.

In some embodiments, the acquisition module 203 is configured to acquire a second configuration instruction; the determination module 201 is configured to determine whether to enable the effective time offset configuration based on the second configuration instruction.

In some embodiments, the first configuration instruction at includes: a beam configuration instruction. In some embodiments, the beam configuration instruction includes at least one of: a beam identification (ID), beam switching, a transmission configuration indication (TCI) state indication, transmission configuration indication (TCI) state activation, transmission configuration indication (TCI) state switching, a spatial relationship indication, spatial relationship activation, spatial relationship switching.

In some embodiments, the effective time offset configuration is determined according to at least one of: a capability, a type, or a characteristic of the first communication node.

In some embodiments, the effective time of the first configuration instruction is a time from a reference time with a first latency is passed through, and the first latency is determined according to at least one of: the effective time offset configuration or a second latency.

In some embodiments, the effective time offset configuration includes at least one of: a scaling factor, an offset value.

In some embodiments, the first latency is the offset value; or the first latency is a sum of the second latency and the offset value; or the first latency is a product of the second latency and the scaling factor; or the first latency is a sum of a third latency and the offset value, where the third latency is a product of the second latency and the scaling factor.

In some embodiments, the reference time is a time of receiving the first configuration instruction, or a time of sending feedback information corresponding to the first configuration instruction.

In some embodiments, the effective time offset configuration is predefined, pre-configured, or configured by the second communication node.

In some embodiments, the effective time offset configuration is indicated by at least one of: a SIB signaling, a RRC signaling, a MAC CE, UCI, or DCI.

In some embodiments, the second communication node is a communication node in a non-terrestrial network.

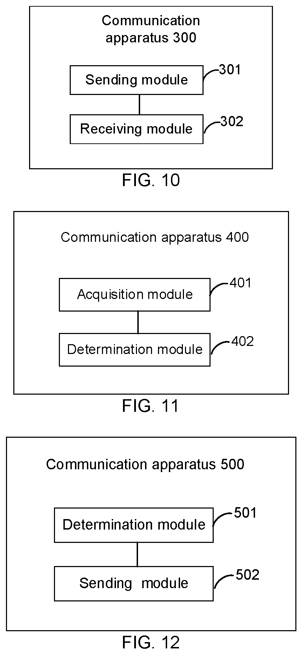

FIG. 10 is a structural schematic diagram of a communication apparatus provided in the embodiments of the present disclosure. The communication apparatus is applied to a second communication node, and is capable of performing the communication method provided in the above method embodiments. As shown in FIG. 10, the communication apparatus 300 includes: a sending module 301 and a receiving module 302.

The receiving module 301 is configured to send an effective time offset configuration to a first communication node.

The receiving module 301 is further configured to send a first configuration instruction to the first communication node; where the effective time offset configuration is used for adjusting an effective time of the first configuration instruction.

In some embodiments, the first configuration instruction at includes: a beam configuration instruction. In some embodiments, the beam configuration instruction includes at least one of: a beam identification (ID), beam switching, a transmission configuration indication (TCI) state indication, transmission configuration indication (TCI) state activation, transmission configuration indication (TCI) state switching, a spatial relationship indication, spatial relationship activation, spatial relationship switching.

In some embodiments, the effective time offset configuration is determined according to at least one of: a capability, a type, or a characteristic of the first communication node.

In some embodiments, the effective time of the first configuration instruction is a time from a reference time with a first latency is passed through, and the first latency is determined according to the effective time offset configuration and a second latency.

In some embodiments, the effective time offset configuration includes at least one of: a scaling factor, an offset value.

In some embodiments, the first latency is the offset value; or the first latency is a sum of the second latency and the offset value; or the first latency is a product of the second latency and the scaling factor; or the first latency is a sum of a third latency and the offset value, where the third latency is a product of the second latency and the scaling factor.

In some embodiments, the reference time is a time of receiving the first configuration instruction, or a time of sending feedback information corresponding to the first configuration instruction.

In some embodiments, the effective time offset configuration is indicated by at least one of: a SIB signaling, a RRC signaling, a MAC CE, UCI, or DCI.

In some embodiments, the second communication node is a communication node in a non-terrestrial network.

FIG. 11 is a structural schematic diagram of a communication apparatus provided in the embodiments of the present disclosure. The communication apparatus is applied to a first communication node, and is capable of performing the communication method provided in the above method embodiments. As shown in FIG. 11, the communication apparatus 400 includes: an acquisition module 401 and a determination module 402.

The acquisition module 401 is configured to acquire assistance information.

The determination module 402 is configured to determine, based on the assistance information, a time for allowing to perform uplink transmission after GNSS information expires.

In some embodiments, the assistance information includes a first time.

In some embodiments, the time for allowing to perform uplink transmission is the first time; or the time for allowing to perform uplink transmission is a second time, and the second time is a difference between the first time and a remaining valid time for the GNSS information; or the time for allowing to perform uplink transmission is a third time, and the third time is a difference or a sum of the first time and an offset time, wherein the offset time is predefined, pre-configured, or configured by a second communication node; or the time for running to perform uplink transmission is a fourth time, and the fourth time is a difference or a sum of the second time and the offset time.

In some embodiments, the determination module 402 is configured to, upon acquiring the assistance information, extend a first timer of the GNSS information for the first time or the second time; or upon expiration of the first timer, restart the first timer, and extend a timing duration of the first timer, where an extended duration is any one of the first time, the second time, the third time, or the fourth time; or upon expiration of the first timer, restart the first timer, and set a timing duration of the first timer to any one of the first time, the second time, the third time, or the fourth time; where the first timer is a timer for determining validity of the GNSS information.

In some embodiments, the determination module 402 is configured to, upon expiration of a first timer for the GNSS information, start a second timer, and set a timing duration of the second timer to any one of the first time, the second time, the third time, or the fourth time; where the first timer is a timer for determining validity of the GNSS information.

In some embodiments, the determination module 402 is configured to, upon acquiring the assistance information, start a second timer, and set a timing duration of the second timer to the first time or the third time.

In some embodiments, the assistance information is predefined, pre-configured, or configured by the second communication node.

In some embodiments, the assistance information is indicated by at least one of: a SIB signaling, a RRC signaling, a MAC CE, or DCI.

In some embodiments, the acquisition module 401 is further configured to acquire a control instruction, the determination module 401 is further configured to determine whether to enable the assistance information based on the control instruction.

FIG. 12 is a structural schematic diagram of a communication apparatus provided in the embodiments of the present disclosure. The communication apparatus is applied to a second communication node, and is capable of performing the communication method provided in the above method embodiments. As shown in FIG. 12, the communication apparatus 500 includes: a determination module 501 and a sending module 502.

The determination module 501 is configured to determine assistance information.

The sending module 502 is configured to send the assistance information to a first communication node, where the assistance information is used to indicate the first communication node to determine a time for allowing to perform uplink transmission after GNSS information expires.

In some embodiments, the assistance information includes a first time.

In some embodiments, the uplink transmission time is the first time; or the uplink transmission time is a second time, and the second time is a difference between the first time and a remaining valid time for the GNSS information; or the time for allowing to perform uplink transmission is a third time, and the third time is a difference or a sum of the first time and an offset time, wherein the offset time is predefined, pre-configured, or configured by a second communication node; or the time for allowing to perform uplink transmission is a fourth time, and the fourth time is a difference or a sum of the second time and the offset time.

In some embodiments, the assistance information is indicated by at least one of: a SIB signaling, a RRC signaling, a MAC CE, or DCI.

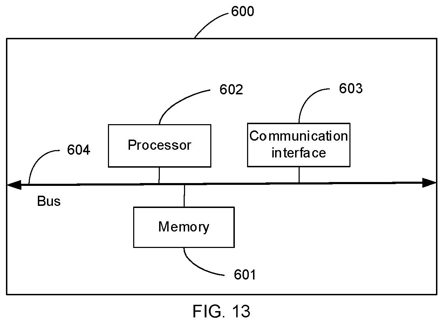

In a case where the functions of the above-mentioned integrated modules are implemented in the form of hardware, a possible structure of a communication apparatus involved in the above-mentioned embodiments is provided in the embodiments of the present disclosure. As shown in FIG. 13, the communication apparatus 600 includes a memory 601, a processor 602, a communication interface 603, and a bus 604.

The memory 601 may be a read-only memory (ROM) or other types of static storage devices that can store static information and instructions, a random access memory (RAM), or other types of dynamic storage devices that can store dynamic information and instructions, or an electrically erasable programmable read-only memory (EEPROM), a magnetic disk storage medium or any other magnetic storage devices, or any other medium that can be used to carry or store desired program codes with a form of instructions or data and can be accessed by a computer, which is not limited thereto.

The processor 602 may implement or perform various exemplary logical blocks, modules and circuits described in combination with the embodiments of the present disclosure. The processor 602 may be a central processor, a general-purpose processor, a digital signal processor, an application specific integrated circuit, a field programmable gate array, or other programmable logic component, a transistor logic component, a hardware assembly, or any combination thereof. The processor 602 may implement or execute various illustrative logical blocks, modules and circuits described in conjunction with the embodiments of the present disclosure. The processor 602 may also be a combination that implements computing functions, for example, the processor 602 includes a combination of one or more microprocessors, a combination of a DSP (digital signal processor) and a microprocessor, or the like.

The communication interface 603 is configured to connect with other devices through a communication network. The communication network may be the Ethernet, a radio access network, a wireless local area networks (WLAN), or the like.

In some embodiments, the memory 601 may exist independently from the processor 602, and the memory 601 may be connected to the processor 602 through the bus 604 for storing instructions or program codes. When the processor 602 invokes and executes the instructions or program codes stored in the memory 601, the processor 602 may implement the communication method provided in the embodiments of the present disclosure.

In embodiments, the memory 601 may be integrated with the processor 602.

The bus 604 may be an extended industry standard architecture (EISA) bus, or the like. The bus 604 may be classified as an address bus, a data bus, a control bus, or the like. For ease of representation, only one thick solid line is used in FIG. 13 for representing the bus 604, but it does not indicate that there is only one bus or one type of bus.

A computer-readable storage medium (for example, a non-transitory computer-readable storage medium) is provided in some embodiments of the present disclosure, the computer-readable storage medium has stored computer program instructions, and the computer program instructions, upon being executed by a computer, enable the computer to perform the communication method as described in any one of the above embodiments.

For example, the above-mentioned computer-readable storage medium may include, but not limited to: a magnetic storage device (e.g., a hard disk, a floppy disk, or a magnetic tape, etc.), an optical disk (e.g., a compact disk (CD), a digital versatile disk (DVD), etc.), a smart card and a flash memory device (e.g., an erasable programmable read-only memory (EPROM), a card, a stick or a key driver, etc.). The various computer-readable storage media described in the present disclosure may represent one or more devices for storing information and/or other machine-readable storage medium for storing information. The term "machine-readable storage medium" may include, but is not limited to, a wireless channel and various other media capable of storing, containing, and/or carrying instructions and/or data.

A computer program product including instructions is provided in the embodiments of the present disclosure, when the computer program product is run on a computer, the computer is enabled to perform the communication method as described in any one of the above-mentioned embodiments.

The above descriptions are merely specific implementations of the present disclosure, but the scope of protection of the present disclosure is not limited thereto; any variations or replacements within the technical scope disclosed in the present disclosure shall fall within the protection scope of the present disclosure. Therefore, the protection scope of the present disclosure should be subject to the protection scope of the claims.

**Claims**

1. A communication method, applied to a first communication node, wherein the method comprises:

   determining an effective time offset configuration; and
   adjusting an effective time of a first configuration instruction of a second communication node based on the effective time offset configuration.

2. The method according to claim 1, further comprising:

   acquiring a second configuration instruction;
   determining whether to enable the effective time offset configuration based on the second configuration instruction.

3. The method according to claim 1, wherein the first configuration instruction at least comprises: a beam configuration instruction.

4. The method according to claim 3, wherein the beam configuration instruction comprises at least one of: a beam identification (ID), beam switching, a transmission configuration indication (TCI) state indication, TCI state activation, TCI state switching, a spatial relationship indication, spatial relationship activation, spatial relationship switching.

5. The method according to claim 1, wherein the effective time offset configuration is determined according to at least one of: a capability, a type, or a characteristic of the first communication node.

**6.** The method according to claim 1, wherein the effective time of the first configuration instruction is a time from a reference time with a first latency is passed through, and the first latency is determined according to at least one of: the effective time offset configuration or a second latency.

**7.** The method according to claim 6, wherein the effective time offset configuration comprises at least one of: a scaling factor, an offset value.

**8.** The method according to claim 7, wherein

the first latency is the offset value; or
the first latency is a sum of the second latency and the offset value; or
the first latency is a product of the second latency and the scaling factor; or
the first latency is a sum of a third latency and the offset value, wherein the third latency is a product of the second latency and the scaling factor.

**9.** The method according to claim 6, wherein the reference time is a time of receiving the first configuration instruction, or a time of sending feedback information corresponding to the first configuration instruction.

**10.** The method according to claim 1, wherein the effective time offset configuration is predefined, pre-configured, or configured by the second communication node.

**11.** The method according to claim 1, further comprising: indicating the effective time offset configuration to the second communication node.

**12.** The method according to claim 10 or 11, wherein the effective time offset configuration is indicated by at least one of: a system information block (SIB) signaling, a radio resource control (RRC) signaling, a medium access control control element (MAC CE), uplink control information (UCI), or downlink control information (DCI).

**13.** The method according to claim 1, wherein the second communication node is a communication node in a non-terrestrial network.

**14.** A communication method, applied to a second communication node, wherein the method comprises:

sending an effective time offset configuration to a first communication node; and
sending a first configuration instruction to the first communication node; wherein the effective time offset configuration is used for adjusting an effective time of the first configuration instruction.

**15.** The method according to claim 14, wherein the first configuration instruction at least comprises: a beam configuration instruction.

**16.** The method according to claim 15, wherein the beam configuration instruction comprises at least one of: a beam identification (ID), beam switching, a transmission configuration indication (TCI) state indication, transmission configuration indication (TCI) state activation, transmission configuration indication (TCI) state switching, a spatial relationship indication, spatial relationship activation, spatial relationship switching.

**17.** The method according to claim 14, wherein the effective time offset configuration is determined according to at least one of: a capability, a type, or a characteristic of the first communication node.

**18.** The method according to claim 14, wherein the effective time of the first configuration instruction is a time from a reference time with a first latency is passed through, and the first latency is determined according to the effective time offset configuration and a second latency.

**19.** The method according to claim 18, wherein the effective time offset configuration comprises at least one of: a scaling factor, an offset value.

**20.** The method according to claim 19, wherein

the first latency is the offset value; or
the first latency is a sum of the second latency and the offset value; or
the first latency is a product of the second latency and the scaling factor; or
the first latency is a sum of a third latency and the offset value, wherein the third latency is a product of the second latency and the scaling factor.

**21.** The method according to claim 20, wherein the reference time is a time of receiving the first configuration instruction, or a time of sending feedback information corresponding to the first configuration instruction.

**22.** The method according to claim 14, wherein the effective time offset configuration is indicated by at least one of: a SIB signaling, a RRC signaling, a MAC CE, or DCI.

**23.** The method according to claim 14, wherein the second communication node is a communication node in a non-terrestrial network.

24. A communication method, applied to a first communication node, wherein the method comprises:

    acquiring assistance information;
    determining, based on the assistance information, a time for allowing to perform uplink transmission after global navigation satellite system (GNSS) information expires.

25. The method according to claim 24, wherein the assistance information comprises a first time.

26. The method according to claim 25, wherein the time for allowing to perform uplink transmission is the first time; or the time for allowing to perform uplink transmission is a second time, and the second time is a difference between the first time and a remaining valid time for the GNSS information; or the time for allowing to perform uplink transmission is a third time, and the third time is a difference or a sum of the first time and an offset time, wherein the offset time is predefined, pre-configured, or configured by a second communication node; or the time for allowing to perform uplink transmission is a fourth time, and the fourth time is a difference or a sum of the second time and the offset time.

27. The method according to claim 26, wherein determining, based on the assistance information, the time for allowing to perform uplink transmission after the GNSS information expires comprises:

    upon acquiring the assistance information, extending a timing duration of a first timer for the GNSS information, wherein an extended duration is any one of the first time, the second time, the third time, or the fourth time; or
    upon expiration of the first timer, restarting the first timer and setting a timing duration of the first timer to any one of the first time, the second time, the third time, or the fourth time; wherein the first timer is a timer for determining validity of the GNSS information.

28. The method according to claim 26, wherein determining, based on the assistance information, the time for allowing to perform uplink transmission after the GNSS information expires comprises:
    upon expiration of a first timer for the GNSS information, starting a second timer and setting a timing duration of the second timer to any one of the first time, the second time, the third time, or the fourth time; wherein the first timer is a timer for determining validity of the GNSS information.

29. The method according to claim 26, wherein determining, based on the assistance information, the time for allowing to perform uplink transmission after the GNSS information expires comprises:
upon acquiring the assistance information, starting a second timer and setting a timing duration of the second timer to the first time or the third time.

30. The method according to claim 24, wherein the assistance information is predefined, pre-configured, or configured by a second communication node.

31. The method according to claim 30, wherein the assistance information is indicated by at least one of: a SIB signaling, a RRC signaling, a MAC CE, or DCI.

32. The method according to claim 24, further comprising:

    acquiring a control instruction; and
    determining whether to enable the assistance information based on the control instruction.

33. A communication method, applied to a second communication node, wherein the method comprises:

    determining assistance information; and
    sending the assistance information to a first communication node, wherein the assistance information is used to indicate the first communication node to determine a time for allowing to perform uplink transmission after GNSS information expires.

34. The method according to claim 33, wherein the assistance information comprises a first time.

35. The method according to claim 34, wherein the uplink transmission time is the first time; or the uplink transmission time is a second time, and the second time is a difference between the first time and a remaining valid time for the GNSS information; or the time for allowing to perform uplink transmission is a third time, and the third time is a difference or a sum of the first time and an offset time, wherein the offset time is predefined, pre-configured, or configured by the second communication node; or the time for allowing to perform uplink transmission is a fourth time, and the fourth time is a difference or a sum of the second time and the offset time.

36. The method according to claim 33, wherein the assistance information is indicated by at least one of: a SIB signaling, a RRC signaling, a MAC CE, or DCI.

37. A communication apparatus, comprising: a processor and a memory for storing instructions executable for the processor;

wherein the processor is configured to execute the instructions, to enable the communication apparatus to perform the communication method according to any one of claims 1 to 36.

38. A computer-readable storage medium, wherein the computer-readable storage medium stores computer instructions that, upon being run on a computer, enable the computer to execute the communication method according to any one of claims 1 to 36.

100

FIG. 1

| Determine effective time offset configuration | S101 |

| On the basis of the effective time offset configuration, adjust the effective time of a first configuration instruction of a second communication node | S102 |

FIG. 2

First configuration
instruction    HARQ-ACK

Downlink:

| | | | | | | | a1 | | a2 | |

Uplink:

| | | | | | | a1 | | a2 | |

First configuration    HARQ-ACK
instruction

FIG. 3

| Acquire a second configuration instruction | a1 |

↓

| Determine an adjustment result based on the second configuration instruction | a2 |

FIG. 4

| Send effective time offset configuration to a first communication node | S201 |

↓

| Send a first configuration instruction to the first communication node | S202 |

FIG. 5

| Acquire assistance information | S301 |

↓

| Determine, based on the assistance information, a time for allowing to perform uplink transmission after GNSS information expires | S302 |

FIG. 6

Acquire a control instruction — S401

Determine whether to enable assistance information based on the control instruction — S402

FIG. 7

Determine assistance information — S501

Send the assistance information to the first communication node — S502

FIG. 8

Communication apparatus 200

Determination module — 201

Adjustment module — 202

Acquisition module — 203

FIG. 9

Communication
apparatus 300

Sending module ⌐301

Receiving module ⌐302

FIG. 10

Communication apparatus 400

Acquisition module ⌐401

Determination module ⌐402

FIG. 11

Communication apparatus 500

Determination module ⌐501

Sending  module ⌐502

FIG. 12

600

602

603

604

Processor

Communication interface

Bus

Memory

601

FIG. 13

## INTERNATIONAL SEARCH REPORT

| International application No. |
|---|
| **PCT/CN2024/097710** |

### A.　CLASSIFICATION OF SUBJECT MATTER

H04W56/00(2009.01)i

According to International Patent Classification (IPC) or to both national classification and IPC

### B.　FIELDS SEARCHED

Minimum documentation searched (classification system followed by classification symbols)

　　IPC: H04W

Documentation searched other than minimum documentation to the extent that such documents are included in the fields searched

Electronic data base consulted during the international search (name of data base and, where practicable, search terms used)

　　CNTXT, ENTXTC, VEN, CJFD, CNKI, 3GPP, ISI: 非地面网络, 控制, 信令, 配置, 生效, 激活, 有效, 偏移, 时间, NTN, control, signal, configure, effective, activation, offset, time

### C.　DOCUMENTS CONSIDERED TO BE RELEVANT

| Category* | Citation of document, with indication, where appropriate, of the relevant passages | Relevant to claim No. |
|---|---|---|
| PX | CN 117956562 A (ZTE CORP.) 30 April 2024 (2024-04-30)<br>　　claims 1-38 | 1-38 |
| X | CN 112335200 A (BEIJING XIAOMI MOBILE SOFTWARE CO., LTD.) 05 February 2021 (2021-02-05)<br>　　description, paragraphs 128-257 | 1-38 |
| X | MODERATOR (ERICSSON). "Feature lead Summary on Timing Relationship Enhancements"<br>*3GPP TSG-RAN WG1 Meeting #102-e, R1-200xxxx URL: https://www.3gpp.org/ftp/tsg_ran/WG1_RL1/TSGR1_102-e/Inbox/drafts/8.4.1/R1-200xxxx FL summary on NTN timing relationships_V024_Moderator_Moderator_V020_FraunhoferIIS_FraunhoferHHI_Apple_Sony.docx.* 28 August 2020 (2020-08-28),<br>　　pages 9 and 27-29 | 1-38 |
| A | CN 104010368 A (ZTE CORP.) 27 August 2014 (2014-08-27)<br>　　entire document | 1-38 |

☑ Further documents are listed in the continuation of Box C. 　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **13 September 2024** | **20 September 2024** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**EP 4 787 983 A1**

**INTERNATIONAL SEARCH REPORT**

| International application No. |
| --- |
| **PCT/CN2024/097710** |

| C. | DOCUMENTS CONSIDERED TO BE RELEVANT | |
| --- | --- | --- |
| Category* | Citation of document, with indication, where appropriate, of the relevant passages | Relevant to claim No. |
| A | US 2019313357 A1 (QUALCOMM INC.) 10 October 2019 (2019-10-10)<br>  entire document | 1-38 |
| A | MEDIATEK INC. "Timing Relationship Enhancements for NR-NTN"<br>*3GPP TSG RAN WG1 Meeting #102e, R1-2005495,* 28 August 2020 (2020-08-28),<br>  entire document | 1-38 |

Form PCT/ISA/210 (second sheet) (July 2022)

**INTERNATIONAL SEARCH REPORT**
Information on patent family members

International application No.

**PCT/CN2024/097710**

| Patent document cited in search report | | | Publication date (day/month/year) | Patent family member(s) | | | Publication date (day/month/year) |
|---|---|---|---|---|---|---|---|
| CN | 117956562 | A | 30 April 2024 | None | | | |
| CN | 112335200 | A | 05 February 2021 | WO | 2022061717 | A1 | 31 March 2022 |
| | | | | EP | 4221031 | A1 | 02 August 2023 |
| | | | | US | 2023370235 | A1 | 16 November 2023 |
| | | | | IN | 202347026600 | A | 05 May 2023 |
| CN | 104010368 | A | 27 August 2014 | None | | | |
| US | 2019313357 | A1 | 10 October 2019 | WO | 2019195410 | A1 | 10 October 2019 |
| | | | | EP | 3776912 | A1 | 17 February 2021 |
| | | | | US | 10959201 | B2 | 23 March 2021 |
| | | | | CN | 111954988 | A | 17 November 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311295214